# EUROPÄISCHE PATENTSCHRIFT

(11) **EP 3 954 482 B1**
(45) Veröffentlichungstag und Bekanntmachung des Hinweises auf die Patenterteilung: **26.03.2025**
(21) Anmeldenummer: 20191090.8
(22) Anmeldetag: 14.08.2020
(51) Int. Cl.: B23B 27/00, B23B 27/16

(54) **WERKZEUGSYSTEM**
TOOL SYSTEM
SYSTÈME D'OUTIL

(43) Veröffentlichungstag der Anmeldung: 16.02.2022
(73) Patentinhaber: Simtek AG, 72116 Mössingen (DE)
(72) Erfinder: Seifermann, Norbert, 72116 Mössingen (DE)
(74) Vertreter: Jakelski & Althoff Patentanwälte PartG mbB

(56) Entgegenhaltungen:
- WO-A1-2007/006575
- DE-A1- 102006 055 277
- DE-A1- 3 402 547
- DE-T5- 112018 004 430
- DE-U1- 29 508 900

## Beschreibung

Die vorliegende Erfindung betrifft ein Werkzeugsystem, das einen Werkzeugträger und einen Wechselschneideinsatz aufweist.

### Stand der Technik

Drehmeißel sind, auch wenn ihre Schneiden aus Hartmetall oder anderen Hartwerkstoffen bestehen, einem starken Verschleiß ausgesetzt und müssen häufig nachgeschliffen oder ausgewechselt werden. Drehmeißel aus Vollhartmetall haben aufgrund ihres Materialpreises und Herstellungspreises meistens nur eine Schneide und sind nur für ein begrenztes Einsatzgeiet ausgelegt. Nach dem Verschleiß müssen sie aus der Maschine entfernt werden.

Allerdings können Drehmeißel auch mehrere Schneiden aufweisen. Durch Drehen des Drehmeißels kann so bei Abnutzung einer Schneide eine frische Schneide zum Einsatz gebracht werden, ohne den Drehmeißel vollständig aus einer Maschine herausnehmen zu müssen. Auf diese Weise werden Verzögerungen durch einen Austausch des Drehmeißels und einer deswegen notwendigen Neupositionierung in der Maschine vermieden.

Die DE 10 2004 013 835 A1 beschreibt einen solchen Drehmeißel, der für das Innendrehen ausgelegt ist. Mehrere wahlweise in Schneideingriff bringbare Schneiden gehen sternförmig von einem Meißelkopf aus, der einstückig mit einem Meißelschaft verbunden ist.

Beim Einsatz eines solchen Werkzeugs kann es allerdings zu unplanmäßigen Beschädigungen der nicht im Einsatz befindlichen Schneiden kommen. Ein kleiner Span, der von der aktiven Schneide abgehoben wird und der die passiven Schneiden streift, reicht oftmals schon aus, um diese so zu beschädigen, dass sie keinen hohen Ansprüchen an die Bearbeitungsqualität mehr genügen. Damit wäre der gesamte Wechselschneideinsatz Ausschuss.

In der WO 2007/006575 A1 wird ein Feinbearbeitungswerkzeug beschrieben, welches an seiner Stirnseite sechs tangential angeordnete Schneiden aufweist, die alle gleich ausgebildet sind. Jeweils an die Schneiden angrenzende Stützflächen liegen an einer zu bearbeitenden Wand einer Bohrung an.

Ein Einstechmesser ist aus der DE 295 08 900 bekannt. Dieses weist eine in Schneideingriff bringbare Schneide auf, die an einem Klemmhalter angeordnet ist. Die Schneide ist mittels einer Schraube auf einem Sitz eines Klemmhalters befestigt.

Eine Aufgabe der vorliegenden Erfindung besteht darin ein Werkzeugsystem bereitzustellen, das insbesondere als Drehmeißel eingesetzt werden kann und an dem mehrere Schneiden so angeordnet ist, dass eine aktive Schneide eingesetzt werden kann, ohne dass dabei die Gefahr besteht, die passiven Schneiden zu beschädigen.

### Offenbarung der Erfindung

Diese Aufgabe wird erfindungsgemäß durch ein Werkzeugsystem gelöst, welches einen Werkzeugträger und einen Wechselschneideinsatz mit vorzugsweise mindestens drei Schneiden aufweist. Besonders bevorzugt weist er genau drei Schneiden auf. Unter einer Schneide wird dabei nicht nur der geschliffene Bereich eines Schneidteils verstanden, sondernd das gesamte Schneidteil, das durch Spanfläche und Freifläche begrenzt wird. Der Werkzeugträger weist einen Hals mit einem Sitz auf, auf dem der Wechselschneideinsatz angeordnet ist. Unter einem Hals wird dabei ein Bereich verstanden, der üblicherweise an einen zu bearbeitenden Durchmesser angepasst ist. Der Hals weist üblicherweise einen kreiszylinderförmigen Querschnitt auf. An den Hals des Werkzeugträgers schließt sich ein Aufnahmebereich an, der zum Spannen des Werkzeugträgers in einer Maschine oder in einem anderen Aufnahmeelement dient. Bevorzugte Materialien für den Werkzeugträger sind Stahl, eine Kombination aus Hartmetall und Stahl oder eine Kombination aus Schwermetall und Stahl.

Die Schneiden des Wechselschneideinsatzes stehen insbesondere im Wesentlichen orthogonal zu der Längsachse des Werkzeugträgers. Dies ermöglicht einen Einsatz des Werkzeugsystems als Drehmeißel. Dabei ist es insbesondere für die Bearbeitung von Durchmessern ab 7,8 mm geeignet.

Der Hals weist einen Schutzbereich auf, welcher entlang der Längsachse über den Sitz vorspringt und der alle Schneiden des Wechselschneideinsatzes mit Ausnahme einer Schneide umgibt. Dabei erstreckt er sich insbesondere mindestens bis zu einem geschliffenen Bereich dieser Schneiden. Während die freiliegende Schneide zur Materialbearbeitung genutzt werden kann, werden alle nicht arbeitenden Schneiden durch den Schutzbereich vor möglichen Spänen und einer damit einhergehenden Beschädigung geschützt. Der Schutzbereich ist vorzugsweise einstückig mit dem Hals ausgebildet.

Um einen besonders zuverlässigen Schutz der nicht arbeitenden Schneiden vor möglichen Spänen zu gewährleisten, ist es bevorzugt, dass eine Länge des Schutzbereichs entlang der Längsachse gleich einer Länge des Wechselschneideinsatzes ist.

Neben der Funktion, die nicht arbeitenden Schneiden zu schützen, kann der Schutzbereich weiterhin auch dazu genutzt werden, um den Wechselschneideinsatz besonders sicher am Werkzeugträger zu fixieren und eine gute Einleitung von auf die aktive Schneide wirkenden Kräften über den Wechselschneideinsatz in den Werkzeugträger zu gewährleisten. Hierzu ist es bevorzugt, dass der Schutzbereich abschnittsweise an dem Wechselschneideinsatz anliegt. Dieses Anliegen erfolgt dabei bevorzugt an einer Mantelfläche des Wechselschneideinsatzes.

Der Schutzbereich ist vorzugsweise als kreisbogenförmiger Vorsprung ausgeführt. Als solcher kann er den Hals entlang der Längsachse des Werkzeugträgers fortsetzen und den Wechselschneideinsatz eng umschließen. Für jede von ihm umgebene Schneide weist der Schutzbereich vorzugsweise eine Ausnehmung auf, in welcher die jeweilige Schneide aufgenommen ist. Auf diese Weise kann der Schutzbereich an seiner Außenseite, also der einem Werkstück zugewandten Seite, eine stetig verlaufende Oberfläche aufweisen, während seine Innenseite, also die dem Wechselschneideinsatz zugewandte Seite, die Ausnehmungen aufweist. Hierdurch variiert die Dicke des Schutzbereiches im Bereich der passiven Schneiden. Um einen zuverlässigen Schutz der passiven Schneiden zu gewährleisten ist es weiterhin bevorzugt, dass die Umfangslänge des Schutzbereiches, die entlang seiner gekrümmten Außenfläche gemessen wird, mindestens 33 % des Umfangs des Halses entspricht. Wenn der Hals einen kreisförmigen Querschnitt aufweist, so bedeutet dies, dass der Schutzbereich sich über einen Kreisbogen mit einem Winkel von mindestens 120° erstreckt. Besonders bevorzugt entspricht die Umfangslänge des Schutzbereiches mindestens 50 % des Umfangs des Halses.

Wenn der Hals einen kreisförmigen Querschnitt aufweist, so bedeutet dies, dass der Schutzbereich sich über einen Kreisbogen mit einem Winkel von mindestens 180° erstreckt.

Eine Seitenfläche jeder Ausnehmung ist gegenüber der Längsachse vorzugsweise abgewinkelt. Dies ermöglicht eine Aufnahme der passiven Schneiden, wenn der Wechselschneideinsatz gegenüber der Längsachse des Werkzeugträgers abgewinkelt ist. Eine solche Abwinkelung ist bevorzugt. Diese bewirkt nämlich, dass ein Spannen des Wechselschneideinsatzes an dem Sitz nicht entlang der Längsachse des Werkzeugträgers, sondern in einem Winkel hierzu erfolgt. Dies bewirkt eine vorteilhafte Kraftaufnahme des Werkzeugsystems bei der Bearbeitung eines Werkstücks. Dabei ist eine Abwinkelung des Wechselschneideinsatzes gegenüber der Längsachse von maximal 10° bevorzugt und von maximal 5° besonders bevorzugt. Weiterhin beträgt die Abwinkelung bevorzugt mindestens 1° und besonders bevorzugt mindestens 2°. Der Sitz ist dabei gegenüber der Längsachse um denselben Winkel abgewinkeit, wie der Wechselschneideinsatz.

Weiterhin weist der Sitz mindestens ein Eingriffselement auf, in welches ein Eingriffselement des Wechselschneideinsatzes eingreift. Dieses ist hierzu an der dem Hals zugewandten Seite des Wechselschneideinsatzes angeordnet. Die Anzahl der Eingriffselemente am Wechselschneideinsatz ist insbesondere gleich der Anzahl der Schneiden des Wechselschneideinsatzes. Die beiden ineinandergreifenden Eingriffselemente bieten zwei Vorteile: Wird der Wechselschneideinsatz erstmals auf den Hals aufgesetzt oder wird er auf dem Hals gedreht, wenn eine abgenutzte Schneide in eine passive Position gebracht werden soll, um gleichzeitig eine bisher unbenutzte Schneide aus ein passiven Position in die aktive Position zu bewegen, so gibt das Eingriffelement dem Benutzer eine haptische Rückmeldung wann der Wechselschneideinsatz im korrekten Winkel zum Sitz positioniert wurde, sodass nun ein Spannen des Wechselschneideinsatzes erfolgen kann. Dies verhindert einen unsachgemäßen Einbau. Zum anderen nimmt das Eingriffelement einen Teil von quer zur Längsachse auf den Wechselschneideinsatz wirkenden Kräften auf, sodass diese nicht ausschließlich durch ein Spannmittel aufgenommen werden müssen. Dadurch wird der Wechselschneideinsatz vor Verdrehungen geschützt.

In einer bevorzugten Ausführungsform des Werkzeugsystems handelt es sich bei dem mindestens einen Eingriffelement des Sitzes und bei dem mindestens einen Eingriffelement des Wechselschneideinsatzes jeweils um eine Verzahnung. In einer anderen bevorzugten Ausführungsform des Werkzeugsystems handelt es sich bei dem mindestens einen Eingriffelement des Sitzes und bei dem mindestens einen Eingriffelement des Wechselschneideinsatzes jeweils um eine Seite eines Polygons. Wenn der Wechselschneideinsatz gegenüber der Längsachse des Werkzeugträgers abgewinkelt ist kann der Wechselschneideinsatz dann beim Drehen der Spannschraube in Richtung der Seitenflächen auf Höhe der passiven Schneiden gezogen werden und der Wechselschneideinsatz so sicher gespannt werden.

In noch einer anderen bevorzugten Ausführungsform der Erfindung weisen der Sitz und der Wechselschneideinsatz jeweils genau ein Eingriffelement auf. Dabei ist eines der Eingriffselemente konkav und das korrespondierende Eingriffselement konvex. Eine Ausrichtung des Wechselschneideinsatzes erfolgt dabei über einen Punkt, an dem eine passive Schneide im Schutzbereich anliegt.

Die Eingreifelemente des Wechselschneideinsatzes können in einem unbearbeiteten, gesinterten Zustand vorliegen. Die Eingreifelemente können aber, je nach Anforderung auch geschliffen werden. Die Eingreifelemente am Sitz werden dann entsprechend angepasst.

Als Spannmittel wird vorzugsweise eine Spannschraube verwendet, die durch eine Stirnseite des Wechselschneideinsatzes in den Sitz hinein verläuft. Diese stirnseitige Spannung des Werkzeugsystems hat gegenüber einer Spannung entlang der Durchmesserachse des Werkzeugträgers den Vorteil, dass der Hals des Werkzeugträgers nicht unnötig geschwächt wird, was einen stabileren Drehprozess und höhere Auskraglängen ermöglicht.

Weiterhin ist es bevorzugt, dass ein Kühlmittelkanal durch einen Aufnahmebereich und den Hals des Werkzeugträgers verläuft und in mindestens einer Auslassöffnung an einer Mantelfläche des Halses mündet. Während Kühlmittelkanäle in derartigen Werkzeugsystemen grundsätzlich wünschenswert sind, können sie durch eine Spannung entlang der Trägerdurchmesserachse oftmals nicht realisiert werden, da aufgrund dieser kein ausreichender Bauraum für den Kühlmittelkanal im Hals verbleibt. Das erfindungsgemäße Werkezugsystem weist hingegen in seinem Hals noch ausreichend Platz auf, um einen Kühlmittelkanal positionieren zu können.

In einer bevorzugten Ausführungsform des Werkzeugsystems, weist es eine Auslassöffnung auf, die der aktiven Schneide zugewandt ist. Dies ermöglicht eine aktive Kühlung der aktiven Schneide. In einer anderen bevorzugten Ausführungsform des Werkzeugsystems, weist es eine Auslassöffnung auf, die von der aktiven Schneide abgewandt ist. Dies ermöglicht eine passive Kühlung der aktiven Schneide.

### Kurze Beschreibung der Zeichnungen

Ausführungsbeispiele der Erfindung sind in den Zeichnungen dargestellt und werden in der nachfolgenden Beschreibung näher erläutert.
Figur 1a zeigt eine isometrische Darstellung eines Werkzeugsystems gemäß einem Ausführungsbeispiel der Erfindung.
Figur 1b zeigt eine Seitenansicht des Werkzeugsystems gemäß Figur 1a.
Figur 1c zeigt eine Seitenansicht des Werkzeugsystems gemäß Figur 1a, welches gegenüber der Darstellung in Figur 1b entlang seiner Längsachse um 90° gedreht wurde.
Figur 1d zeigt eine Detailansicht aus Figur 1c.
Figur 2a zeigt eine isometrische Detailansicht des Halses eines Werkzeugträgers eines Werkzeugsystems gemäß einem Ausführungsbeispiel der Erfindung.
Figur 2b zeigt eine Ansicht auf den in Figur 2a dargestellten Hals eines Werkzeugträgers von seiner Stirnseite.
Figur 3a zeigt eine Seitenansicht eines Wechselschneideinsatzes eines Werkzeugsystems gemäß einem Ausführungsbeispiel der Erfindung.
Figur 3b zeigt eine isometrische Darstellung des Wechselschneideinsatzes gemäß Figur 3a.
Figur 3c zeigt eine Ansicht des Wechselschneideinsatzes gemäß Figur 3a von seiner Rückseite.
Figur 4 zeigt eine isometrische Explosionsdarstellung eines Werkzeugsystems gemäß einem Ausführungsbeispiel der Erfindung.
Figur 5 zeigt eine Ansicht auf ein Werkzeugsystem gemäß einem Ausführungsbeispiel der Erfindung von seiner Stirnseite.

### Ausführungsbeispiele der Erfindung

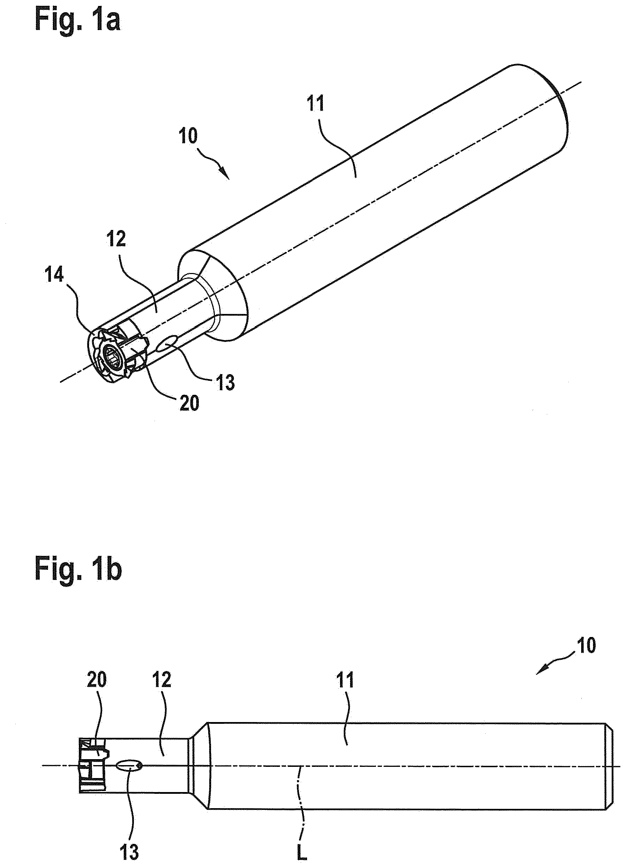

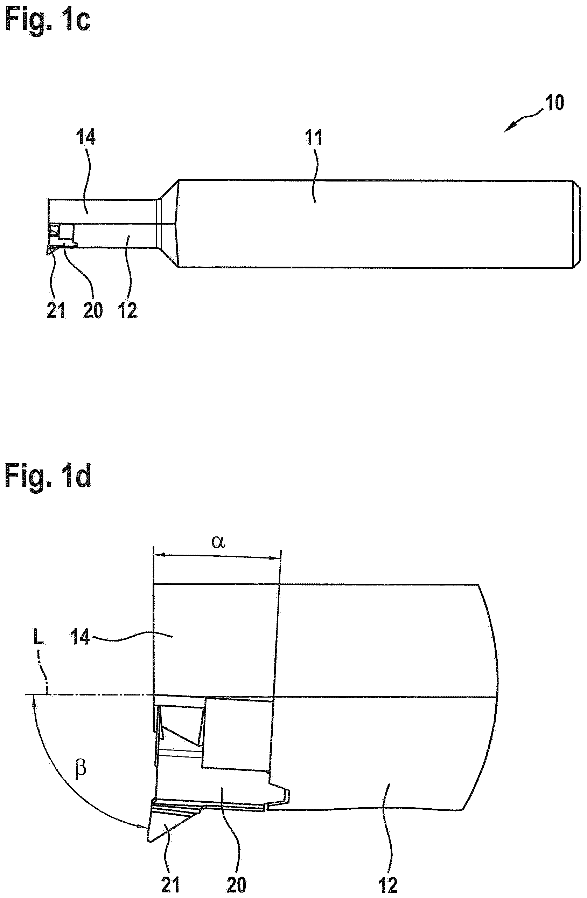

Ein Werkzeugsystem gemäß einem ersten Ausführungsbeispiel der Erfindung im zusammengebauten Zustand ist in den Figuren 1a bis 1d dargestellt. Das Werkzeugsystem weist einen Werkzeugträger 10 mit einem kreiszylinderförmigen Aufnahmebereich 11 und einem kreiszylinderförmigen Hals 12 auf, der vorliegend aus Stahl besteht. Der Aufnahmebereich 11 ist dazu vorgesehen, um das Werkzeugsystem in einer Maschine aufzunehmen. Der Hals 12 trägt an seiner Stirnseite einen Wechselschneideinsatz 20 mit Schneiden aus Hartmetall. Er weist einen geringeren Durchmesser als der Aufnahmebereich 11 auf und ist an einem zu bearbeitenden Durchmesser eines Werkstücks angepasst. Durch den Aufnahmebereich 11 und den Hals 12 verläuft ein Kühlmittelkanal, der in einer Öffnung 13 im Hals 12 mündet. Diese Öffnung 13 und eine aktive Schneide 21 des Wechselschneideinsatzes 20 liegen auf einer gemeinsamen Geraden, die parallel zur Längsachse L des Werkzeugträgers 10 verläuft. Ein einstückig mit dem Aufnahmebereich 11 und dem Hals 12 ausgebildeter Schutzbereich 14 springt vom Hals 12 vor. Dabei entspricht die Länge des Schutzbereiches 14 entlang der Längsachse L der Länge des Wechselschneideinsatzes 20. Die Längsachse des Wechselschneideinsatzes 20 ist gegenüber der Längsachse L des Werkzeugträgers 10 um einen Winkel α von 2° geneigt. Der Winkel β der aktiven Schneide 21 zur Längsachse L des Werkzeugträgers 10 beträgt dadurch 88°.

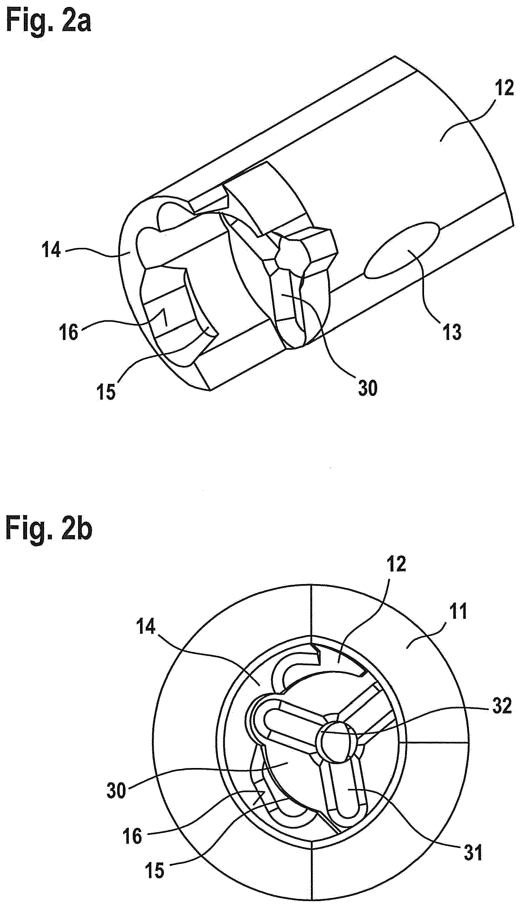

In den Figuren 2a und 2b ist der Schutzbereich 14 detailliert dargestellt. Dieser weist zwei Ausnehmungen 15 auf, um zwei passive Schneiden des Wechselschneideinsatzes 20 aufnehmen zu können. Für eine dieser Ausnehmungen 15 ist in der Darstellung in Figur 2a ihre Seitenfläche 16 erkennbar. Da der Sitz 30 am Hals 12 auf dem der Wechselschneideinsatz 20 ruht, um denselben Winkel α wie der Wechselschneideinsatz 20 gegenüber der Längsachse L des Werkzeugträgers 10 geneigt ist, verläuft auch die Seitenfläche 16 gegenüber der Längsachse L des Werkzeugträgers 10 abgewinkelt, um so eine Aufnahme der darin zu positionierenden Schneide zu ermöglichen, ohne dass diese den Sitz 14 kontaktiert. Zwischen der Ausnehmung 16 und dem Sitz 30 liegt der Wechselschneideinsatz 20 jedoch am Schutzbereich 14 an und wird auf diese Weise zusätzlich stabilisiert. Der Sitz 30 weist Eingriffelemente 31 in Form einer Verzahnung mit drei Zähnen auf. Außerdem läuft orthogonal durch seinen Mittelpunkt eine Gewindebohrung 32 hindurch. Diese ist um den Winkel α gegenüber der Längsachse L des Werkzeugträgers 10 geneigt.

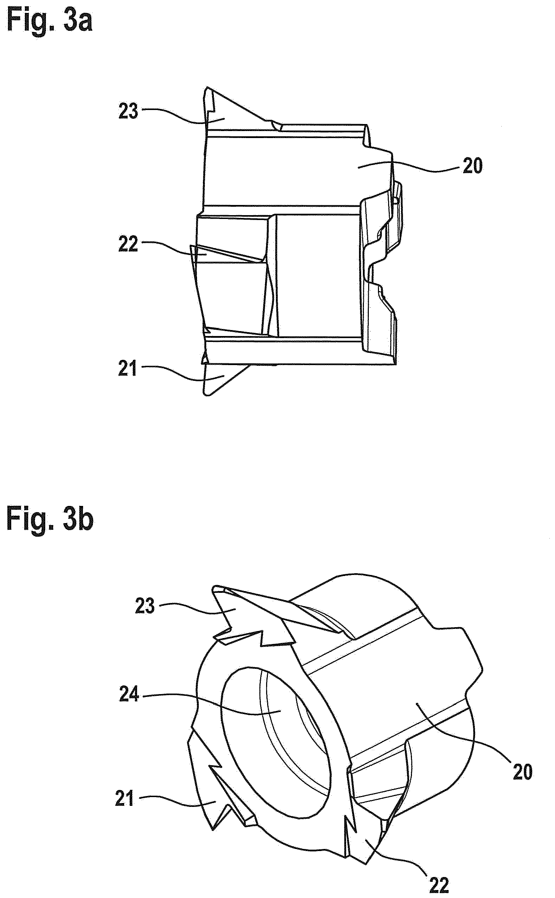

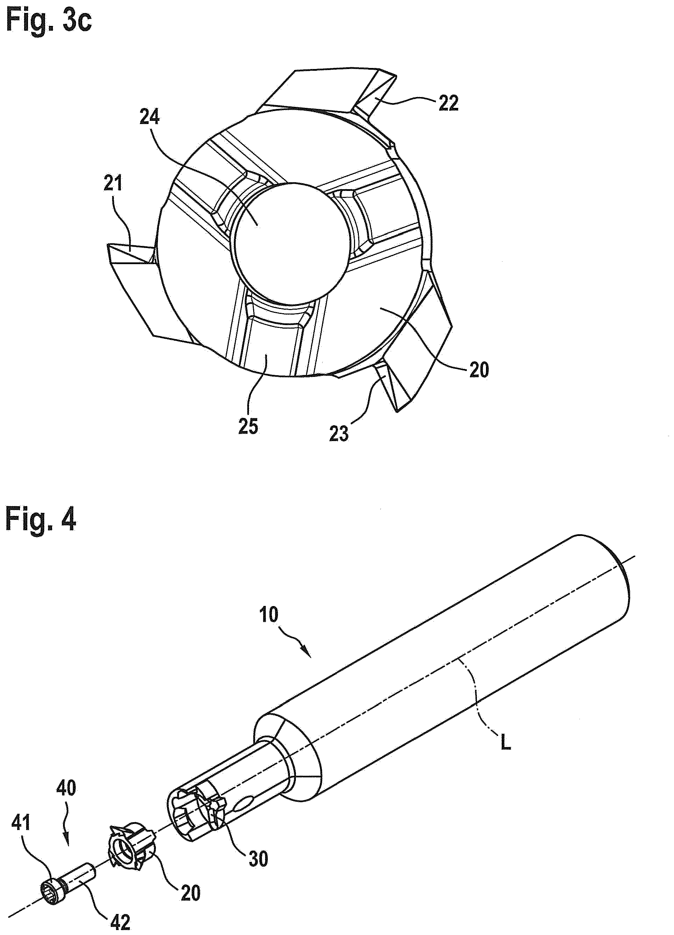

Wie in den Figuren 3a bis 3c dargestellt ist, weist der Wechselschneideinsatz 20 drei Schneiden 21 bis 23 auf. Im zusammengebauten Zustand des Werkzeugsystems, der in den Figuren 1a bis 1d dargestellt ist, fungiert die erste Schneide 21 als aktive Schneide und die weiteren Schneiden 22, 23 als passive Schneiden, die vom Schutzbereich 14 umgeben sind und von dessen Ausnehmungen 15 aufgenommen werden. Entlang der Längsachse des Wechselschneideinsatzes 20 geht eine kreiszylinderförmige Öffnung 24 durch diesen hindurch, welche an seiner Stirnseite eine Senkung aufweist. Auf der der Stirnseite gegenüberliegenden Seite des Wechselschneideinsatzes 20 sind Eingriffelemente 25 in Form einer Verzahnung mit drei Zähnen angeordnet. Diese sind eingerichtet, um mit den Eingriffelementen 31 des Sitzes 30 einzugreifen. Dabei sind sowohl die Eingriffelemente 25 des Wechselschneideinsatzes 20 als auch die Eingriffelemente 31 des Sitzes 30 jeweils in einem Winkel von 120° zueinander angeordnet. Wird der Wechselschneideinsatz 20 so auf den Sitz 30 aufgesetzt, dass die Zähne 25, 31 miteinander eingreifen, so wird dadurch beispielsweise die erste Schneide 21 in die in den Figuren 1a bis 1d dargestellte Position gebracht.

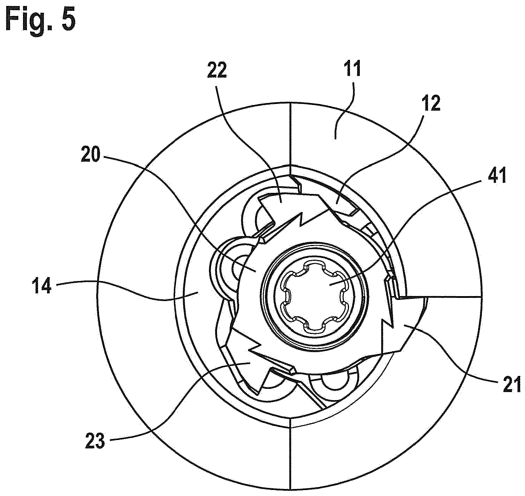

Die Figuren 4 und 5 zeigen wie der Wechselschneideinsatz 20 mittels einer Spannschraube 40 am Sitz 30 gespannt werden kann. Die Spannschraube weist einen Kopf 41 und einen Schraubenschaft 42 auf. Nachdem der Wechselschneideinsatz 20 so auf dem Sitz 30 positioniert wurde, dass die Zähne 25, 31 miteinander eingreifen, wird die Spannschraube 40 durch die Öffnung 24 des Wechselschneideinsatzes 20 geführt und der Schraubenschaft 42 in die Gewindebohrung 32 des Sitzes 30 eingeschraubt. Dabei wird der Kopf 41 der Spannschraube 40 in der Senkung der Öffnung 24 versenkt.

Wenn die erste Schneide 21 abgenutzt ist, genügt es die Spannschraube 40 so weit zu lockern, dass der Wechselschneideinsatz 20 entlang der Spannschraube 40, die um den Winkel α von 2° von der Längsachse L des Werkzeugträgers 10 abgewinkelt ist, soweit vom Sitz 30 entfernt werden kann, dass die Schneiden 21 bis 23 über dem Schutzbereich 14 hinausstehen. Dann kann der Wechselschneideinsatz 20 um 120° gedreht werden und anschließend mittels der Spannschraube 40 erneut am Sitz 30 gespannt werden. Dadurch wird eine der beiden anderen bisher passiven Schneiden 22, 23 in die aktive Position bewegt und die abgenutzte Schneide 21 in einer der Ausnehmungen 15 des Schutzbereichs 14 positioniert. Ein Herausnehmen des Werkzeugträgers 10 aus der Maschine ist hierzu nicht notwendig.

In einem zweiten Ausführungsbeispiel des Werkzeugsystems ist auf dem Sitz 30 anstelle der Verzahnung ein Vorsprung in Form eines gleichseitigen Dreiecks angeordnet. Jede Seite des Dreiecks bildet dabei ein Eingriffelement 31. Auf der der Stirnseite gegenüberliegenden Seite des Wechselschneideinsatzes 20 ist eine Vertiefung gebildet, die ebenfalls die Form eines geleichseitigen Dreiecks aufweist. Seine Seiten fungieren ebenfalls als Eingriffelemente 25, in welche die Eingriffelemente 31 des Sitzes 30 eingreifen.

In einem dritten Ausführungsbeispiel des Werkzeugsystems weist der Sitz 30 anstelle der Verzahnung eine halbkugelförmige konkave Ausnehmung als Eingriffelement 31 auf. Auf der der Stirnseite gegenüberliegenden Seite des Wechselschneideinsatzes 20 ist eine ein halbkugelförmiger konvexer Vorsprung als Eingriffelement 25 angeordnet welches in das Eingriffelement 31 des Sitzes 30 eingreift.

## Patentansprüche

1. Werkzeugsystem, aufweisend einen Werkzeugträger (10) mit einem Hals (12) und einem auf einem Sitz (30) des Halses (12) angeordneten Wechselschneideinsatz (20), wobei der Hals (12) einen Schutzbereich (14) aufweist, welcher entlang der Längsachse (L) des Werkzeugträgers (10) über den Sitz (30) vorspringt und der alle Schneiden (22, 23) des Wechselschneideinsatzes (20) mit Ausnahme einer Schneide (21) umgibt, **dadurch gekennzeichnet, dass** der Sitz (30) mindestens ein Eingriffelement (31) aufweist, in welches mindestens ein Eingriffelement (25) des Wechselschneideinsatzes (20) eingreift.

2. Werkzeugsystem nach Anspruch 1, **dadurch gekennzeichnet, dass** sich der Schutzbereich (14) mindestens bis zu einem geschliffenen Bereich der Schneiden (22, 23) erstreckt.

3. Werkzeugsystem nach Anspruch 1 oder 2, **dadurch gekennzeichnet, dass** eine Länge des Schutzbereichs (14) entlang der Längsachse (L) gleich einer Länge des Wechselschneideinsatzes (20) ist.

4. Werkzeugsystem nach einem der Ansprüche 1 bis 3, **dadurch gekennzeichnet, dass** der Schutzbereich (14) als kreisbogenförmiger Vorsprung ausgeführt ist, welcher für jede von ihm umgebene Schneide (22, 23) eine Ausnehmung (15) aufweist, in welcher die jeweilige Schneide (22, 23) aufgenommen ist.

5. Werkzeugsystem nach Anspruch 4, **dadurch gekennzeichnet, dass** eine Seitenfläche (16) jeder Ausnehmung gegenüber der Längsachse (L) abgewinkelt ist.

6. Werkzeugsystem nach einem der Ansprüche 1 bis 5, **dadurch gekennzeichnet, dass** der Wechselschneideinsatz (20) gegenüber der Längsachse (L) abgewinkelt ist.

7. Werkzeugsystem nach einem der Ansprüche 1 bis 6, **dadurch gekennzeichnet, dass** der Schutzbereich (14) abschnittsweise an dem Wechselschneideinsatz (20) anliegt.

8. Werkzeugsystem nach einem der Ansprüche 1 bis 7, **dadurch gekennzeichnet, dass** eine Spannschraube (40) durch eine Stirnseite des Wechselschneideinsatzes (20) in den Sitz (30) hinein verläuft.

9. Werkzeugsystem nach einem der Ansprüche 1 bis 8, **dadurch gekennzeichnet, dass** ein Kühlmittelkanal durch einen Aufnahmebereich (11) und den Hals (12) des Werkzeugträgers (10) verläuft und in mindestens einer Auslassöffnung (13) an einer Mantelfläche des Halses (12) mündet.

## Claims

1. Tool system, having a tool carrier (10) with a neck (12) and an interchangeable cutting insert (20) arranged on a seat (30) of the neck (12), wherein the neck (12) has a protection area (14), which projects over the seat (30) along the longitudinal axis (L) of the tool carrier (10) and it surrounds all the edges (22, 23) of the interchangeable cutting insert (20) except one edge (21), **characterised in that** the seat (30) has at least one engaging element (31) into which at least one engaging element (25) of the interchangeable cutting insert (20) engages.

2. Tool system according to claim 1, **characterised in that** the protection area (14) at least extends up to a ground area of the edges (22, 23).

3. Tool system according to claim 1 or 2, **characterised in that** a length of the protection area (14) is identical to a length of the interchangeable cutting insert (20), along the longitudinal axis (L).

4. Tool system according to one of claims 1 to 3, **characterised in that** the protection area (14) is designed as a circular-shaped projection, which has a cavity (15) for each edge (22, 23) surrounded by it, in which the respective edge (22, 23) is received.

5. Tool system according to claim 4, **characterised in that** a side surface (16) of each cavity is at an angle in comparison to the longitudinal axis (L).

6. Tool system according to one of claims 1 to 5, **characterised in that** the interchangeable cutting insert (20) is at an angle in comparison to the longitudinal axis (L).

7. Tool system according to one of claims 1 to 6, **characterised in that** the protection area (14) is partially placed on the interchangeable cutting insert (20).

8. Tool system according to one of claims 1 to 7, **characterised in that** a clamping screw (40) runs through an end face of the interchangeable cutting insert (20) into the seat (30).

9. Tool system according to one of claims 1 to 8, **characterised in that** a coolant channel runs through a receiving region (11) and the neck (12) of the tool carrier (10) and flows into at least one discharge port (13) at a lateral surface of the neck (12).

## Revendications

1. Système d'outillage comprenant un porte-outil (10) doté d'un col (12) et d'un accessoire de coupe interchangeable (20) disposé sur un siège (30) du col (12), ledit col (12) présentant une zone de protection (14) qui dépasse du siège (30) le long de l'axe longitudinal (L) du porte-outil (10) et qui enveloppe toutes les arêtes de coupe (22, 23) de l'accessoire de coupe interchangeable (20) à l'exception d'une arête de coupe (21) ; **caractérisé en ce que** le siège (30) présente au moins un élément d'emboîtement (31) dans lequel s'emboîte au moins un élément d'emboîtement (25) de l'accessoire de coupe interchangeable (20).

2. Système d'outillage selon la revendication 1, **caractérisé en ce que** la zone de protection (14) s'étend au moins jusqu'à une zone aiguisée des arêtes de coupe (22, 23).

3. Système d'outillage selon la revendication 1 ou 2, **caractérisé en ce qu'**une longueur de la zone de protection (14) le long de l'axe longitudinal (L) est égale à une longueur de l'accessoire de coupe interchangeable (20).

4. Système d'outillage selon l'une des revendications 1 à 3, **caractérisé en ce que** la zone de protection (14) est conçue sous la forme d'une saillie en arc de cercle qui présente un évidement {15) pour chaque arête de coupe (22, 23) qu'elle enveloppe, chaque arête de coupe (22, 23) logeant dans son évidement respectif.

5. Système d'outillage selon la revendication 4, **caractérisé en ce qu'**une surface latérale (16) de chaque évidement est inclinée par rapport à l'axe longitudinal (L).

6. Système d'outillage selon l'une des revendications 1 à 5, **caractérisé en ce que** l'accessoire de coupe interchangeable (20) est incliné par rapport à l'axe longitudinal (L).

7. Système d'outillage selon l'une des revendications 1 à 6, **caractérisé en ce que** la zone de protection (14) est en appui, par sections, sur l'accessoire de coupe interchangeable (20).

8. Système d'outillage selon l'une des revendications 1 à 7, **caractérisé en ce qu'**une vis de serrage (40) traverse une face frontale de l'accessoire de coupe interchangeable (20) pour pénétrer dans le siège (30).

9. Système d'outillage selon l'une des revendications 1 à 8, **caractérisé en ce qu'**un canal de liquide de refroidissement traverse une zone de réception (11) et le col (12) du porte-outil (10) et débouche dans au moins une ouverture de sortie (13) présente sur une surface latérale du col (12).
